# FASCICULE DE BREVET EUROPEEN

(11) **EP 0 813 061 B1**
(45) Date de publication et mention de la délivrance du brevet: **14.05.2003**
(21) Numéro de dépôt: 97401312.0
(22) Date de dépôt: 10.06.1997
(51) Int. Cl.: G01N 29/14

(54) **Procédé et dispositif de détection de la présence de bulles d'air par émission acoustique**
Verfahren und Vorrichtung zur Erfassung von Luftblasen mittels Schallemission
Method and apparatus for detecting the presence of air bubbles by means of acoustic emission

(30) Priorité: 13.06.1996 FR 9607369
(43) Date de publication de la demande: 17.12.1997
(73) Titulaire: AUTOMOBILES PEUGEOT, 75116 Paris (FR); AUTOMOBILES CITROEN, 92200 Neuilly-sur-Seine (FR)
(72) Inventeur: Gillet, Bernard, 78990 Elancourt (FR)
(74) Mandataire: Berger, Helmut

(56) Documents cités:
- EP-A- 0 163 069
- FR-A- 2 606 152
- US-A- 4 090 400
- ACOUSTICAL PHYSICS, vol. 41, no. 3, 1 Mai 1995, page 449/450 XP000516560 EROFEEV A V ET AL: "ACOUSTIC EMISSION ACCOMPANYING THE RUPTURE OF THIN AQUEOUS FILMS"

## Description

L'invention concerne un procédé de détection de la présence de bulles d'air dans un cordon tel qu'un cordon de colle, appliqué par une buse sur un objet support, et un système pour la mise en oeuvre de ce procédé.

Les objets à encoller peuvent être par exemple des glaces de pare-brise, des glaces-arrière ou des glaces de lunette arrière de véhicule automobile ou aussi des éléments de doublure de porte ou de capot.

Or, la colle stockée dans des bidons ou fûts est acheminée à la buse d'encollage par une pompe peut contenir des bulles d'air qui rendent le cordon alors non homogène et disconu, ce qui affecte la qualité du cordon et pourrait entraîner par exemple des défauts d'étanchéité au niveau du cordon. Il est donc nécessaire de détecter la présence des bulles d'air.

Les systèmes de détection des bulles d'air, qui sont connus, exploitent la chute de pression résultant de l'échappement des bulles d'air au niveau de la sortie de la pompe et à l'intérieur des canalisations. Un tel système est connu par le document EP 0 163 069. Ces systèmes connus présentent l'inconvénient majeur que leur sensibilité est considérablement réduite par les effets d'amortissement engendrés par les canalisations et la colle soumise à une forte pression.

La présente invention a pour but de proposer un procédé et un système pour la mise en oeuvre de celui-ci, qui pallient les inconvénients des systèmes connus.

Pour atteindre ce but, le procédé selon l'invention est caractérisé en ce que l'on détecte les bulles d'air en captant les ondes ultra-sonores émises par l'explosion créé par l'échappement brutal des bulles d'air à la sortie de la buse.

Selon une caractéristique avantageuse de l'invention, on établit le niveau ultra-sonore ambiant et ne retient pour la détection de bulles d'air que les ondes ultra-sonores qui dépassent un seuil prédéterminé en fonction du niveau ambiant.

Selon encore une autre caractéristique avantageuse de l'invention, on mesure le niveau sonore ambiant au départ de chaque cycle d'encollage et détermine le seuil précité en fonction de ce niveau de bruit.

Selon encore une autre caractéristique avantageuse de l'invention, on identifie l'emplacement d'une bulle d'air avantageusement par marquage.

Le système pour la mise en oeuvre du procédé selon l'invention est caractérisé en ce qu'il comprend un capteur des ondes ultra-sonore, situé à proximité de la buse, et un dispositif d'exploitation des signaux électriques produits par le capteur.

Selon une caractéristique avantageuse, le dispositif d'exploitation comprend une unité à seuil réglable adaptée pour produire des signaux de sortie seulement en réponse à des signaux d'entrée en provenance du capteur, qui dépassent ledit seuil.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :

La figure 1 illustre sous forme d'un schéma fonctionnel un système de détection de la présence de bulles d'air selon la présente invention.

La figure 2 illustre, sous forme de diagrammes, deux phases du procédé de détection des bulles d'air selon. l'invention.

La figure 3 est une vue schématique d'un premier mode de réalisation des dispositifs de détection des bulles d'air et de marquage des emplacements de celles-ci, du système selon la présente invention.

La figure 4 est une vue schématique, similaire à la figure 3, d'un deuxième mode de réalisation des dispositifs de détection et de marquage.

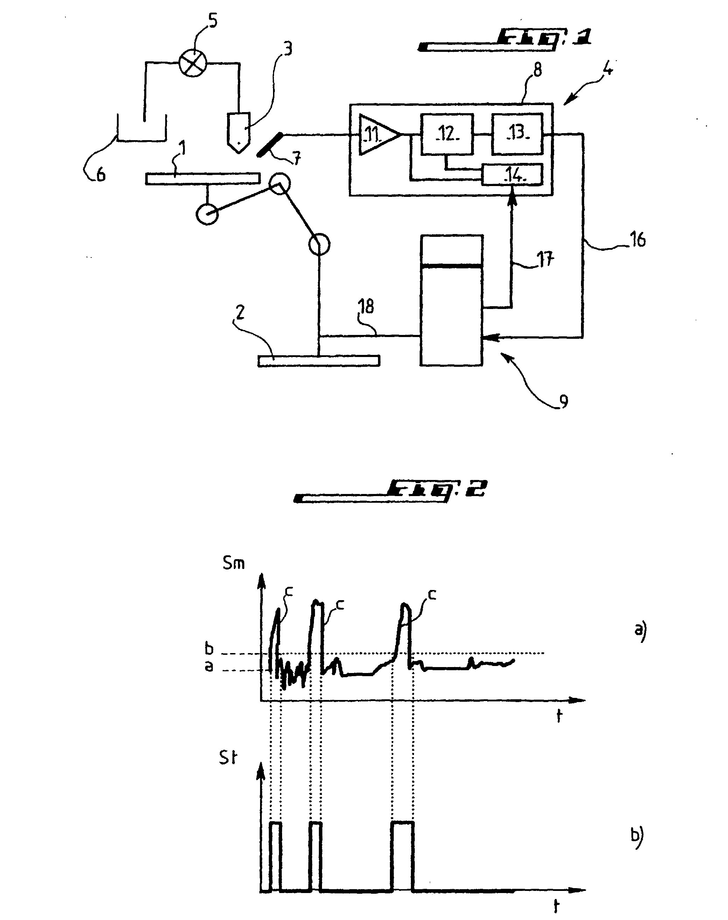

Sur la figure 1, le chiffre de référence 1 désigne l'objet à encoller tel qu'une glace de pare-brise, glace latérales ou glace de lunette arrière de véhicule automobile ou encore un élément de doublure de porte ou de capot, 2 un robot où manipulateur de l'organe à encoller 1, 3 une buse d'encollage et 4 le système de détection des bulles d'air contenues dans la colle appliquée par la buse 3 sur l'objet 1. La figure montre encore en 5 et 6 un réservoir contenant de la colle et une pompe pour acheminer celle-ci à la buse 3.

Le système de détection des bulles d'air 4 est fondé sur l'exploitation de l'effet de l'explosion créé par l'échappement brutal des bulles d'air emprisonnées et soumises à forte pression dans la colle à la sortie de la buse 3. Cet échappement brutal des bulles d'air occasionne une émission de sons audibles et une émission importante d'ondes ultra-sonores. Ces dernières sont captées et exploitées dans le contexte du bruit ambiant du milieu industriel dans lequel l'encollage a eu lieu, dans le cadre de la présente invention.

A cette fin, le système selon l'invention comprend un capteur 7 des ondes ultra-sonores engendré lors de l'échappement des bulles d'air de la buse 3, un dispositif de traitement 8 des signaux électrique produits par le capteur 7 et une baie de commande 9 interposée entre le dispositif de traitement 8 et le robot 2.

Le capteur 7 est situé au voisinage de la sortie de la colle de la buse 3 et joue le rôle de microphone pour les ondes ultra-sonores. Le dispositif de traitement 8 comprend un montage en série d'un amplificateur 11 des signaux électriques en provenance du capteur 7, une unité à seuil réglable conçue pour ne laisser passer que les signaux dépassant ce seuil et une unité de mise en forme 13 des signaux produits à la sortie de l'unité 12. Le dispositif 8 comprend en outre une unité de tarage 14 pour l'établissement du seuil de l'unité 12.

La baie de commande 9 reçoit par la connexion 16 les signaux de détection d'une bulle d'air, donne en 17 les signaux de départ d'un cycle d'encollage à l'unité de tarage 14 et agit par l'intermédiaire d'une connextion 18 sur le robot 2.

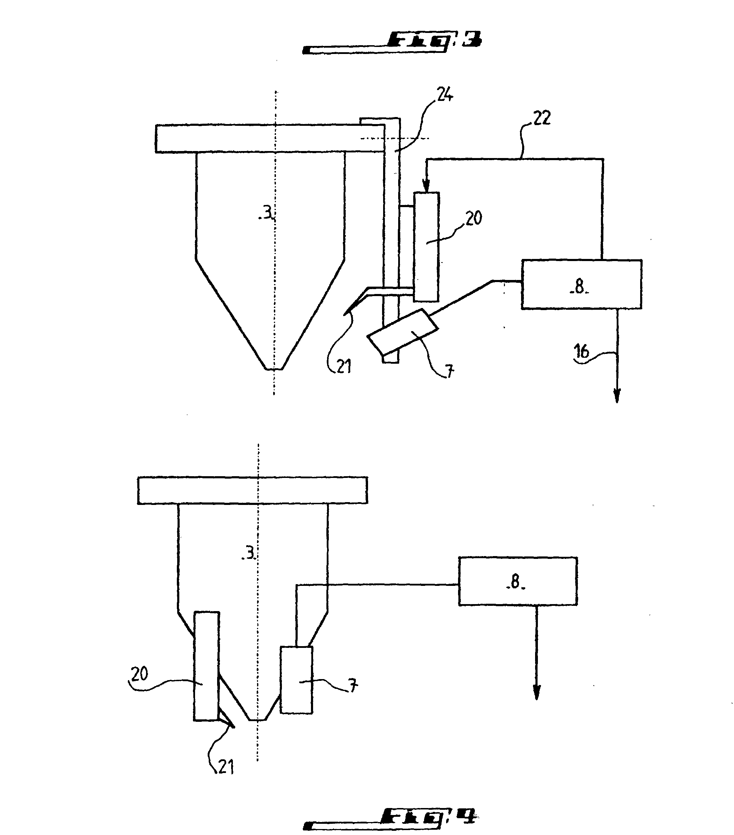

En se reportant à la figure 3, on constate que le système selon l'invention est pourvu d'un dispositif de marquage de l'emplacement d'une détection de la présence d'une bulle d'air. Ce dispositif comprend un réservoir de peinture 20 et une buse 21 de marquage par projection de peinture. Comme on le voit sur la figure, la buse de marquage est situé à proximité de la buse d'encollage 3 et diffuse sur le cordon de colle une fine trace de peinture qui est facilement visible afin de permettre les investigations ultérieures. Comme l'indique la ligne fléché 22, le dispositif de marquage est commandé par le dispositif de traitement 8.

Dans le mode de réalisation représenté sur la figure 3 le capteur des ondes ultra-sonores 7 et le dispositif de marquage sont montés sur un support spécifique 24 fixé sur la buse 3. Par contre la figure 4 montre, de façon schématique, un mode de réalisation où le capteur 7 et le dispositif de marquage sont intégrés à la buse d'encollage 3.

En se référant à la figure 2, on décrira ci-après le fonctionnement du système de détection de bulles d'air, selon la présente invention.

Dans les premières millisecondes avant le départ d'un cycle d'encollage, déclenché par le front montant d'un signal fourni par la baie de commande 9 au robot manipulateur 2, le système mesure le bruit ultra-sonore ambiant. En fonction de ce niveau de bruit ambiant, l'unité de tarage 14 établit le seuil de détection de l'unité à seuil 11. La figure 2a illustre le signal mesuré Sm en fonction du temps t. La figure indique aussi en a et b respectivement le niveau du bruit ambiant et le seuil de détection situé à une certaine distance au-dessus du niveau a. Le seuil b est choisi de façon que les parties des signaux mesurés indiqués par exemple en c et qui dépassent ce seuil b, indiquent de façon fiable la présence de bulles d'air.

La figure 2b montre le signal traité St que produit l'unité de traitement 13 à partir du signal mesuré Sm. On constate que le dispositif de traitement 8 produit des signaux de sortie qui indiquent la présence de bulles d'air sous forme de signaux tout ou rien. En effet, le dispositif considère toute variation brutale supérieur au seuil b fixé au-dessus du niveau de bruit ambiant a, comme étant engendrée par une bulle d'air.

Les signaux de sortie du dispositif de traitement 8 sont ensuite appliqués au dispositif de marquage et au dispositif de déplacement de l'objet encollé, en vue d'une identification sur le parcours du cordon de colle. Le dispositif de marquage projette un repère de couleur visible sur le cordon, tandis que les coordonnées de positionnement sont mémorisées dans la mémoire du système et pourraient être réutilisées pour une reprise de la trajectoire à l'endroit du défaut.

La décision à prendre dans le cas de la détection d'un défaut sous forme d'une bulle d'air sera prise au niveau de la baie de commande 9. Celle-ci pourrait commander soit les automatismes du système de déplacement des objets à encoller pour que ceux-ci évacuent instantanément l'objet en cours d'encollage vers une zone de retouche soit la poursuite du cycle d'encollage et alerter l'opérateur pour une éventuelle retouche immédiate.

La présente invention fondée sur l'utilisation des ultrasons émis lors de l'échappement de bulles d'air à la sortie de la buse présente les avantages d'une absence de tout contact mécanique de liaison entre le capteur et la buse d'encollage, d'une grande sensibilité permettant la détection de microbulles d'air et de l'application immédiate sur des installations existantes.

## Revendications

1. Procédé de détection de la présence de bulles d'air dans un cordon tel qu'un cordon de colle appliqué par une buse sur un objet, **caractérisé en ce que** l'on détecte les bulles d'air en captant les ondes ultra-sonores émises par l'explosion créée lors de l'échappement brutal des bulles d'air à la sortie de la buse (3).

2. Procédé selon la revendication 1, **caractérisé en ce que** l'on établit le niveau ultra-sonore ambiant (a) et ne retient pour la détection de bulles d'air que les ondes ultra-sonores qui dépassent un seuil (b) prédéterminé en fonction du niveau ambiant (a).

3. Procédé selon la revendication 2, **caractérisé en ce que** l'on établit le niveau ultra-sonore ambiant par mesure au début d'un cycle d'encollage.

4. Procédé selon l'une des revendications 1 ou 3, **caractérisé en ce que** l'on identifie l'emplacement d'une bulle d'air détectée.

5. Système pour la mise en oeuvre du procédé selon l'une des revendications précédentes, **caractérisé en ce qu'**il comprend une buse d'encollage, un capteur (7) des ondes ultra-sonores, qui est situé à proximité de la sortie de la buse d'encollage (3), et un dispositif de traitement et d'exploitation (8) des signaux électriques produits par le capteur.

6. Système selon la revendication 5, **caractérisé en ce que** le dispositif d'exploitation (8) des signaux électriques produits par le capteur (7) comprend une unité à seuil réglable (12), adaptée pour produire des signaux de sortie seulement en réponse à des signaux d'entrée en provenance du capteur (7), qui dépassent ledit seuil.

7. Système selon la revendication 6, **caractérisé en ce que** le dispositif de traitement (8) comprend une unité (13) de mise en forme des signaux produits à la sortie de l'unité à seuil (12), adapté pour produire des signaux tout ou rien, ces signaux étant représentatifs chacun de la détection d'une bulle d'air.

8. Système selon l'une des revendications 6 ou 7, **caractérisé en ce que** le dispositif de traitement (8) comprend une unité de tarage (14) adaptée pour mesurer le niveau ultra-sonore ambiant au départ de chaque cycle d'encollage et pour déterminer le seuil précité de l'unité à seuil (12) en fonction de ce niveau ultra-sonore ambiant.

9. Système selon l'une des revendications 5 à 8, **caractérisé en ce qu'**il comprend un dispositif de marquage (20, 21) par projection d'un repère visible sur l'organe encollé à la suite de la détection d'une bulle d'air.

10. Système selon l'une des revendications 5 à 9 **caractérisé en ce qu'**il comprend des moyens de mémorisation des coordonnées de l'emplacement sur l'organe encollé des défauts représentés par des bulles d'air détectées.

11. Système selon la revendication 9, **caractérisé en ce que** le dispositif de marquage est adapté pour être actionné en fonction d'un signal de sortie du dispositif de traitement (8).

12. Système selon l'une des revendications 5 à 11, **caractérisé en ce que** le capteur (7) des ondes ultra-sonores est fixé sur un support (24) séparé.

13. Système selon l'une des revendications 5 à 11, **caractérisé en ce que** le capteur (7) est intégré à la buse (3).

14. Système selon l'une des revendications 5 à 13, **caractérisé en ce qu'**il comprend des moyens (9) de sélection du traitement d'un objet dont l'encollage a provoqué la production d'un signal de défaut à la suite de la détection d'une bulle d'air, le cas échéant pour orienter cet objet vers un poste de retouche séparé ou pour poursuivre le cycle d'encollage et occasionner une retouche immédiate en cours de cycle.

## Claims

1. Process for the detection of the presence of air bubbles in a line such as a gluing line which is applied to an object by means of a nozzle, **characterised by** the fact that air bubbles are detected by recording the ultrasound waves emitted by the explosion which takes place as a result of the sudden escape of air bubbles at the outlet of the nozzle (3).

2. Process according to claim 1, **characterised by** the fact that the ambient ultrasound level (a) is established and that it is only ultrasound waves which exceed a threshold (b) which has previously been established on the basis of the ambient level (a) which are retained for the purpose of the detection of air bubbles.

3. Process according to claim 2, **characterised by** the fact that the ambient ultrasound level is established by means of measurement at the beginning of the gluing cycle.

4. Process according to claims 1 or 3, **characterised by** the fact that the location of a detected air bubble is identified.

5. System for the implementation of the process according to one of the previous claims, **characterised by** the fact that it includes a gluing nozzle, a sensor (7) of ultrasound waves which is located near to the outlet of the gluing nozzle (3) and a device for the processing and utilisation (8) of electrical signals produced by the sensor.

6. System according to claim 5, **characterised by** the fact that the device for the utilisation (8) of the electrical signals produced by the sensor (7) includes a unit with adjustable threshold (12) which is adapted to ensure that it only produces output signals in response to input signals from the sensor (7) which exceed the threshold

7. System according to claim 6, **characterised by** the fact that the processing device (8) includes a unit (13) for the transformation of the signals produced at the output of the threshold unit (12) which is adapted to produce all-or-nothing signals, these signals each being representative of the detection of an air bubble.

8. System according to one of claims 6 or 7, **characterised by** the fact that the processing device (8) includes a reset unit (14) which is adapted to measure the ambient ultrasound level at the start of each gluing cycle and to determine the previously mentioned threshold of the threshold unit (12) depending on this ambient ultrasound level.

9. System according to one of claims 5 to 8, **characterised by** the fact that it includes device for marking (20, 21) by the projection of a visible mark on the glued body following the detection of an air bubble.

10. System according to one of claims 5 to 9, **characterised by** the fact that it includes devices For ensuring that the co-ordinates of the location of defects represented by the air bubbles detected are recorded on the glued body.

11. System according to claim 9, **characterised by** the fact that the marking device is adapted to be activated as a result of an output signal from the processing device (8)

12. System according to one of claims 5 to 11, **characterised by** the fact that the sensor (7) of the ultrasound waves is attached to a separate support (24).

13. System according to one of claims 5 to 11, **characterised by** the fact that the sensor (7) is incorporated into the nozzle (3).

14. System according to one of claims 5 to 13, **characterised by** the fact that it includes devices (9) for the selection of the treatment of an object whose gluing has given rise to the generation of a fault signal following the detection of an air bubble, where necessary in order to direct this object towards a separate retouching station or in order to continue with the gluing cycle and have immediate retouching take place during the cycle.

## Patentansprüche

1. Verfahren zur Erfassung von vorhandenen Luftblasen in einer Naht, wie etwa eine über eine Düse auf einen Gegenstand aufgetragene Klebstoffnaht, **dadurch gekennzeichnet, dass** die Luftblasen durch Auffangen der Ultraschallwellen erfasst werden, die von der beim heftigen Entweichen der Luftblasen am Austritt der Düse (3) entstehenden Explosion erzeugt werden.

2. Verfahren nach Anspruch 1, **dadurch gekennzeichnet, dass** der Umgebungsultraschallpegel (a) ermittelt wird und für die Erfassung der Luftblasen nur die Ultraschallwellen festgehalten werden, die einen in Abhängigkeit des Umgebungspegels (a) vorbestimmten Schwellwert übersteigen.

3. Verfahren nach Anspruch 2, **dadurch gekennzeichnet, dass** der Umgebungsultraschallpegel durch Messung zu Beginn eines Beleimzyklus ermittelt wird.

4. Verfahren nach Anspruch 1 oder 3, **dadurch gekennzeichnet, dass** der Ort einer erfassten Luftblase identifiziert wird.

5. Einrichtung zum Durchführen des Verfahrens nach einem der vorangehenden Ansprüche, **dadurch gekennzeichnet, dass** sie eine Beleimdüse, einen Sensor (7) für Ultraschallwellen, der sich nahe dem Austritt der Beleimdüse (3) befindet, und eine Vorrichtung (8) zum Verarbeiten und Auswerten der vom Sensor erzeugten elektrischen Signale enthält.

6. Einrichtung nach Anspruch 5, **dadurch gekennzeichnet, dass** die Vorrichtung (8) zum Auswerten der vom Sensor (7) erzeugten elektrischen Signale eine einstellbare Schwellwerteinheit (12) enthält, die dazu ausgelegt ist, Ausgangssignale nur in Antwort auf vom Sensor (7) stammende Eingangssignale zu erzeugen, die den genannten Schwellwert übersteigen.

7. Einrichtung nach Anspruch 6, **dadurch gekennzeichnet, dass** die Verarbeitungsvorrichtung (8) eine Einheit (13) zum Transformieren der am Ausgang der Schwellwerteinheit (12) erzeugten Signale enthält, die dazu ausgelegt ist, Und/Oder-Signale zu erzeugen, wobei diese Signale jeweils die Erfassung einer Luftblase darstellen.

8. Einrichtung nach Anspruch 6 oder 7, **dadurch gekennzeichnet, dass** die Verarbeitungsvorrichtung (8) eine Tariereinheit (14) enthält, die dazu ausgelegt ist, den Umgebungsultraschallpegel zu Beginn eines jeden Beleimzyklus zu messen und den vorgenannten Schwellwert der Schwellwerteinheit (12) in Abhängigkeit von diesem Umgebungsultraschallpegel zu bestimmen.

9. Einrichtung nach einem der Ansprüche 5 bis 8, **dadurch gekennzeichnet, dass** sie eine Markierungsvorrichtung (20, 21) zum Aufspritzen einer sichtbaren Markierung auf das verklebte Teil bei erfolgter Erfassung einer Luftblase enthält.

10. Einrichtung nach einem der Ansprüche 5 bis 9, **dadurch gekennzeichnet, dass** sie Mittel zum Speichern der Koordinaten der Stelle am verklebten Teil aufweist, die erfasste, Fehler darstellende Luftblasen zeigt.

11. Einrichtung nach Anspruch 9, **dadurch gekennzeichnet, dass** die Markierungsvorrichtung dazu ausgelegt ist, in Abhängigkeit von einem Ausgangssignal der Verarbeitungsvorrichtung (8) betätigt zu werden.

12. Einrichtung nach einem der Ansprüche 5 bis 11, **dadurch gekennzeichnet, dass** der Sensor (7) für Ultraschallwellen an einem separaten Träger (24) befestigt ist.

13. Einrichtung nach einem der Ansprüche 5 bis 11, **dadurch gekennzeichnet, dass** der Sensor (7) in der Düse (3) integriert ist.

14. Einrichtung nach einem der Ansprüche 5 bis 13, **dadurch gekennzeichnet, dass** sie Mittel (9) zum Auswählen der Behandlung eines Gegenstands enthält, dessen Verklebung die Erzeugung eines Fehlersignals nach erfolgter Erfassung einer Luftblase hervorgerufen hat, um gegebenenfalls diesen Gegenstand zu einer separaten Nachbearbeitungseinheit zu leiten oder um den Beleimzyklus fortzusetzen und eine umgehende Nachbearbeitung im Laufe des Zyklus zu bewirken.
